(19) Europäisches Patentamt
European Patent Office
Office européen des brevets

(11) **EP 1 580 727 A2**

(12) **EUROPEAN PATENT APPLICATION**

(43) Date of publication:
**28.09.2005 Bulletin 2005/39**

(51) Int Cl.[7]: **G09G 5/00**

(21) Application number: **05251621.8**

(22) Date of filing: **17.03.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **22.03.2004 KR 2004019451**

(71) Applicant: **SAMSUNG ELECTRONICS CO., LTD. Gyeonggi-do (KR)**

(72) Inventors:
• **Hong, Soc-il**
  **Seocho-gu Seoul (KR)**
• **Lee, Sung-chull**
  **Yeongtong-gu Suwon-si Gyeonggi-do (KR)**

(74) Representative: **Waddington, Richard et al
Appleyard Lees,
15 Clare Road
Halifax HX1 2HY (GB)**

(54) **Apparatus, method, and medium for adaptive display control**

(57)    An apparatus, method, and medium for adaptive display control. The apparatus includes a video decoder receiving a video signal and extracting image signal information, a signal processor which performs an operation converting the image signal information using the image signal information and a predetermined parameter of a display mode corresponding to an external environment and provides converted image signal information, a display driver circuit which receives the converted image signal information and drives a display screen, a display unit which includes the display screen, and an interface unit which provides interface allowing a user to select the display mode.

## FIG. 2

**EP 1 580 727 A2**

## Description

The present invention relates to apparatuses, methods, and mediums for adaptive display control, and more particularly, to apparatuses, methods, and mediums for allowing a user to convert a display mode of a display apparatus into a desired mode according to an ambient environment.

Images displayed by display apparatuses including, for example, a cathode ray tube (CRT), a plasma display panel (PDP) or a liquid crystal display (LCD) are greatly influenced by external environmental conditions, such as indoor brightness and outdoor brightness, where the display apparatuses are used.

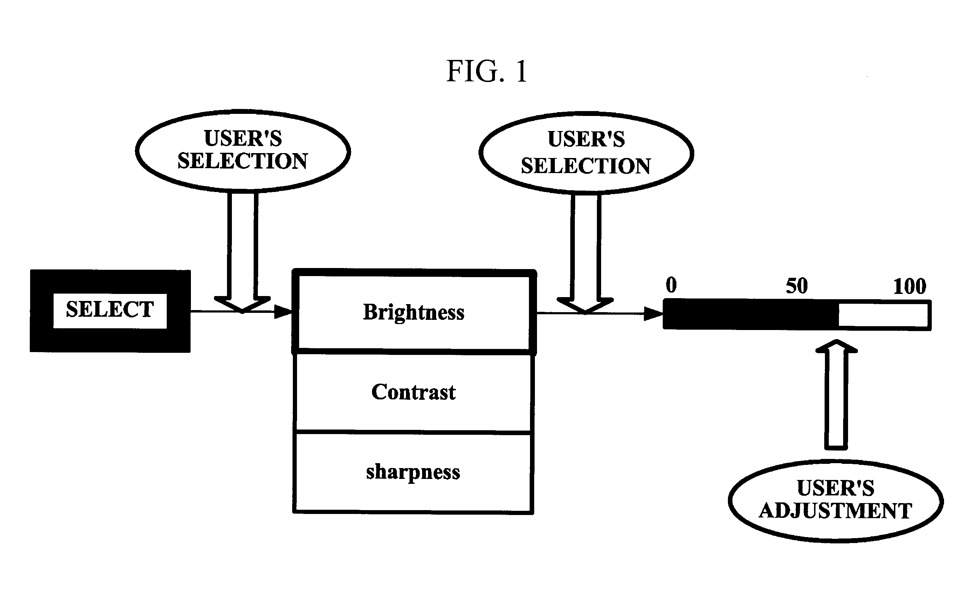

In this situation, a user can control a display apparatus to obtain a desired image by directly adjusting parameters such as brightness, contrast, and sharpness for display control. FIG. 1 illustrates a conventional display control method.

For example, if a user views very bright images displayed on an LCD screen of a digital versatile disc (DVD)-player, he or she may easily have sore eyes. Accordingly, it is necessary to make the image a little darker. So, the user selects a "select" button provided on the DVD-player. Then, parameter items such as "brightness", "contrast", and "sharpness" for display control are displayed on the LCD screen. Next, the user may position a highlight on the "brightness" item using a direction key (not shown) provided on the DVD-player and select the "brightness" item. Then, an interface for controlling the brightness of an image is displayed, so that the user can adjust the brightness of the image using the direction key.

In other words, in conventional technology, as shown in FIG. 1, the user needs to press a menu button, such as the "select" button, to individually select the parameters "brightness", "contrast", and "sharpness", and to individually set the values of the parameters to control image display according to a change in an external environment. However, users may feel that this display control method is inconvenient because this control method is complex. In particular, users who are unfamiliar with display control parameters such as brightness", "contrast", and "sharpness" may feel very uncomfortable.

In addition, when a user increases the brightness of a display screen, such as an LCD screen using the "brightness" parameter, the brightness of the LCD screen is substantially controlled by a driving circuit driving an LCD lamp, thereby increasing power consumption.

Therefore, an apparatus, method, and medium allowing a user to easily control an image display to accommodate changes in external environmental conditions without increasing power consumption is desired.

According to the present invention there is provided an apparatus and method as set forth in the appended claims. Preferred features of the invention will be apparent from the dependent claims, and the description which follows.

According to an aspect of the present invention there is provided display control apparatuses, methods, and mediums by which images with picture quality appropriate to an external environment are displayed with simple button operation by using image signal information and display control parameters, with power consumption being maintained constant when a display mode is changed.

According to an aspect of the present invention there is provided an apparatus for adaptive display control, including a display unit; an interface unit to provide an interface allowing a user to select a display mode corresponding to an external environment of the display unit; and a signal processor to perform at least one operation to convert image signal information, using the image signal information and at least one predetermined display mode parameter corresponding to the selected display mode, to provide the converted image signal information to the display unit.

According to a further aspect of the invention there is provided a video decoder receiving a video signal and extracting the image signal information from the video signal.

According to a further aspect of the invention there is provided a display driver circuit which receives the converted image signal information.

The display unit may further include a display screen, and the display driver circuit may drive the display screen based on the converted image signal information. In addition, the display unit may be one of a cathode ray tube and a liquid crystal display. The display unit may be a plasma display panel.

The image signal information may have a red-green-blue (RGB) 24-bit format, or the image signal information may have an ITU-R BT.656/601 format.

The at least one predetermined display mode parameter may include blacklevel information.

The at least one predetermined display mode parameter may include contrast information.

The at least one predetermined display mode parameter may include brightness information.

The selected display mode may be one of standard, indoor, outdoor, and low-light modes.

According to an aspect of the present invention there is provided a method for adaptive display control, including selecting a display mode corresponding to an external environment; converting image signal information using the image signal information included in a video signal and at least one predetermined display mode parameter of the selected display mode; and displaying the converted image signal information in the selected display mode on a display unit.

The image signal information may have a red-green-blue (RGB) 24-bit format.

The image signal information may have an ITU-R BT.656/601 format.

The at least one predetermined display mode parameter may include blacklevel information.

The at least one predetermined display mode parameter may include contrast information.

The at least one predetermined display mode parameter may include brightness information.

The display unit may be one of a cathode ray tube and a liquid crystal display.

The display unit may be a plasma display panel.

The selected display mode may be one of standard, indoor, outdoor, and low-light.

According to a further aspect of the present invention there is provided a medium comprising computer-readable instructions implementing: selecting a display mode corresponding to an external environment of a display unit; converting image signal information using the image signal information included in a video signal and at least one predetermined display mode parameter of the selected display mode to be displayed in the selected display mode on the display unit.

The image signal information may have a red-green-blue (RGB) 24-bit format.

The image signal information may have an ITU-R BT.656/601 format.

The at least one predetermined display mode parameter may include blacklevel information.

The at least one predetermined display mode parameter may include contrast information.

The at least one predetermined display mode parameter may include brightness information.

The display unit may be one of a cathode ray tube and a liquid crystal display.

The display unit may be a plasma display panel.

The selected display mode may be one of standard, indoor, outdoor, and low-light.

Additional aspects and/or advantages of the invention will be set forth in part in the description which follows and, in part, will be obvious from the description, or may be learned by practice of the invention.

For a better understanding of the invention, and to show how embodiments of the same may be carried into effect, reference will now be made, by way of example, to the accompanying diagrammatic drawings in which:

FIG. 1 illustrates a conventional method for display control;

FIG. 2 is a block diagram of an apparatus for adaptive display control, according to an exemplary embodiment of the present invention;

FIG. 3 is a flowchart of a parameter setting procedure for adaptive display control, according to an exemplary embodiment of the present invention;

FIG. 4 is a flowchart of a display control method, according to an exemplary embodiment of the present invention;

FIG. 5 is a flowchart of a display control method, according to another exemplary embodiment of the present invention;

FIG. 6A illustrates an interface for adaptive display control, according to an exemplary embodiment of the present invention;

FIG. 6B illustrates an interface for adaptive display control, according to another exemplary embodiment of the present invention; and

FIG. 6C illustrates an interface for adaptive display control, according to still another exemplary embodiment of the present invention.

Reference will now be made in detail to exemplary embodiments of the present invention, examples of which are illustrated in the accompanying drawings, wherein like reference numerals refer to the like elements throughout. The embodiments are described below to explain the present invention by referring to the figures.

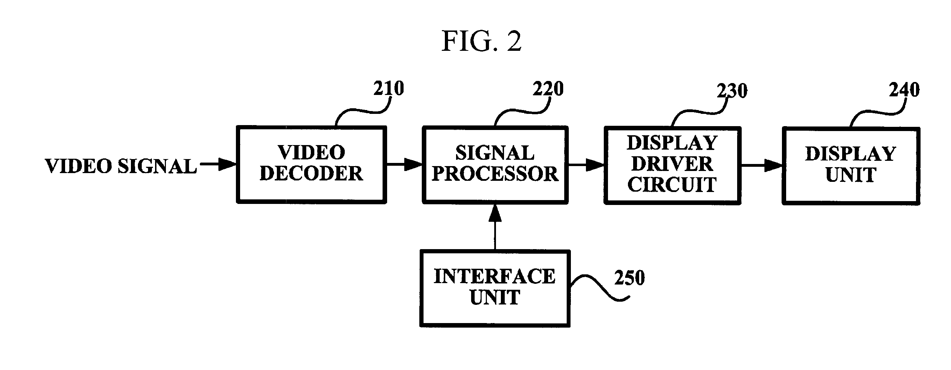

FIG. 2 is a block diagram of an apparatus for adaptive display control according to an exemplary embodiment of the present invention. The apparatus includes a video decoder 210, a signal processor 220, a display driver circuit 230, a display unit 240, and an interface unit 250. The video decoder receives a video signal and extracts image signal information from the video signal. The signal processor 220 performs at least one predetermined operation using the image signal information and at least one parameter of a predetermined display mode displaying an image in accordance with an external environment and provides the image signal information converted as a result of the at least one predetermined operation. The display driver circuit 230 drives a display screen using the image signal information converted by the signal processor 220. The display unit 240 includes a display panel and provides a video image. The interface unit 250 provides an interface allowing a user to select a display mode.

The operations and interactions of the blocks of the apparatus illustrated in FIG. 2 will now be described.

The video decoder 210 receives an encoded video signal having a predetermined format such as a motion picture experts group (MPEG)-2 format and decodes the video signal. The decoded signal may be provided as image signal information in a format such as a red-green-blue (RGB) 24-bit format or an ITU-R BT.656/601 format. Hereinafter, for clarity of the description, the decoded signal includes RGB 24-bit signal information.

The signal processor 220 receives the RGB 24-bit signal information and sets predetermined parameters for image signal processing to values appropriate to an ambient environment to convert the RGB 24-bit signal information received from the video decoder 210. Here, the ambient environment may be divided into a variety of display modes, and the parameters may be set to different values in the individual display modes. These parameters may be referred to as display mode parameters. It is preferable that a definition of each display mode and a value of each parameter are set by a system designer designing the operations of the signal processor 220. However, it will be understood by those skilled in the art that a definition of each display mode and a value of each parameter may be set by a user through a user interface. In addition, a display mode may be selected by a user through the interface unit 250.

The display modes may include, for example, an indoor mode, an outdoor mode, a low-light mode, and a standard mode.

The indoor mode is suitable in an indoor place. The outdoor mode is suitable in an outdoor place. The low-light mode is suitable in a dark place. In the standard mode, an image is not changed by the signal processor 220. It would be appreciated by one skilled in the art that there may be a large variety of display modes.

The parameters may include, for example, a blacklevel, brightness, and contrast. However, the number of parameters is not restricted, and various parameters may be defined by a system designer, for example.

The blacklevel is information regarding a darkest portion in an image. Accordingly, when the blacklevel is increased, the darkest portion in the image becomes brighter, thereby making the entire image hazy. It would be appreciated by one skilled in the art that there may be a large variety of parameters.

Meanwhile, when the RGB 24-bit signal information received from the video decoder 210 is represented with "R_in", "G_in", and "B_in" and when image signals resulting from the conversion by the signal processor 220 are represented with "R_out", "G_out", and "B_out", the RGB 24-bit signal information can be converted by the signal processor 220 using Equations (1) through (3).

$$R\_out=[R\_in-Blacklevel(R)]*Contrast(R)+Brightness(R) \tag{1}$$

$$G\_out=[G\_in-Blacklevel(G)]*Contrast(G)+Brightness(G) \tag{2}$$

$$B\_out=[B\_in-Blacklevel(B)]*Contrast(B)+Brightness(B) \tag{3}$$

Parameters in Equations (1) through (3) may be set to different values according to a display mode.

In addition, the signal processor 220 performs a scaling function that converts the RGB 24-bit signal information received from the video decoder 210 to be suitable for a format of the display unit 240.

The display driver circuit 230 receives the image signals, i.e., the values of R_out, G_out, and B_out from the signal processor 220 and transmits the image signals to the display unit 240 so that an image is provided to a user through a screen of the display unit 240. Examples of display unit 240 may include a cathode ray tube (CRT), a plasma display panel (PDP), or a liquid crystal display (LCD).

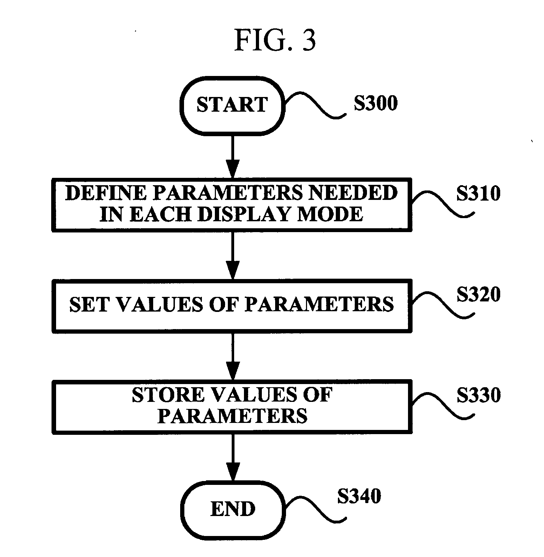

FIG. 3 is a flowchart of a parameter setting procedure for adaptive display control according to an exemplary embodiment of the present invention. The parameter setting procedure may be performed by a system designer designing the operations of the signal processor 220.

In operation S300, the system designer may define the type and number of display modes. In an exemplary embodiment of the present invention, four modes are defined. However, the number of display modes is not restricted, and various display modes may be defined by the system designer.

In operation S310, parameters, which are needed in each of the defined display modes, are defined. In operation S320, values of the defined parameters are set. Here, the values of the parameters may be obtained through experiments. Thereafter, in operation S330, display mode information and parameter information are stored in a memory of the signal processor 220.

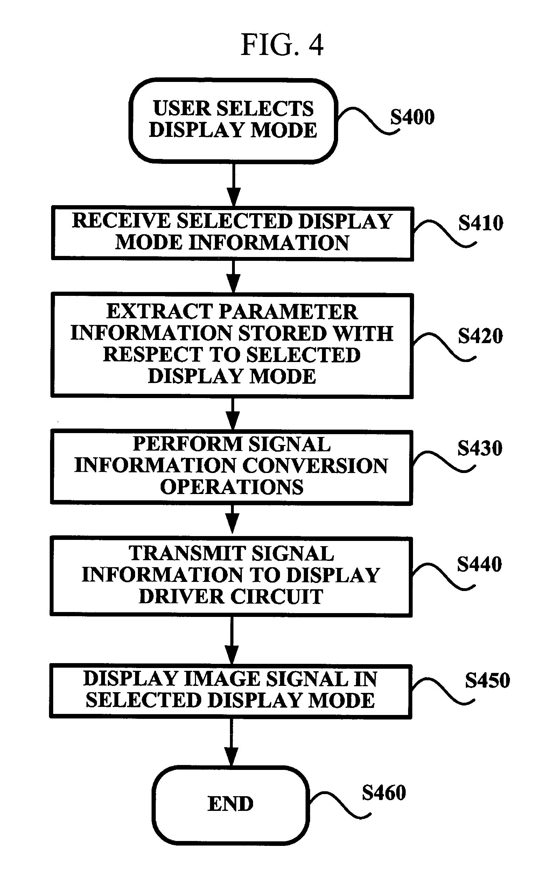

FIG. 4 is a flowchart of a display control method according to an exemplary embodiment of the present invention.

For example, when a user views a movie in a dark place using a DVD-player, the user selects a low-light mode as a display mode using a display mode select button provided in the DVD-player in operation S400.

Then, the signal processor 220 recognizes the selection of the low-light mode in response to an occurrence of interrupt of a user input in operation S410 and extracts parameter information that has been set and stored by the system designer with respect to the selected mode in operation S420. Next, the signal processor 220 performs signal information conversion operations such as Equations (1) through (3) using values of the extracted parameter information in operation S430 and transmits signal information resulting from the operations to the display driver circuit 230 in operation S440. In operation S450, an image signal is displayed in the low-light mode.

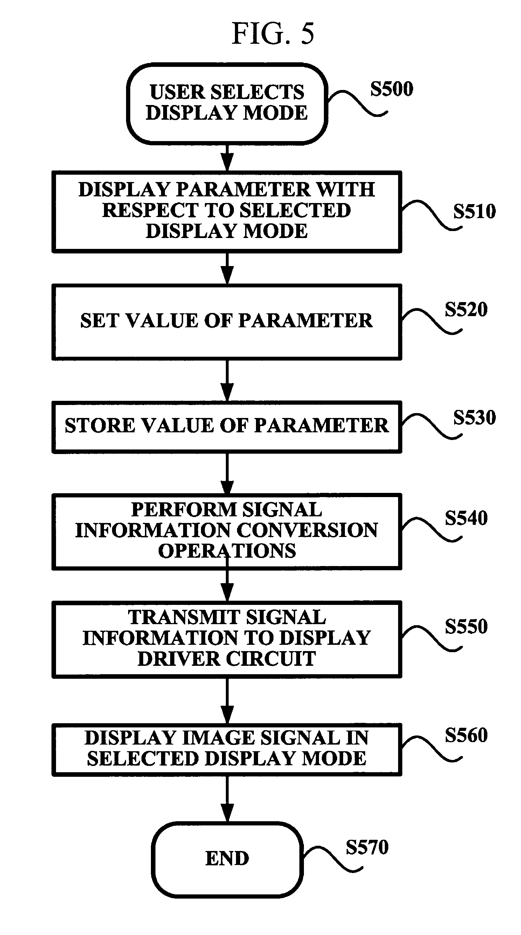

FIG. 5 is a flowchart of a display control method according to another exemplary embodiment of the present invention.

In the exemplary embodiment illustrated in FIG. 4, the parameter information for image signal conversion is set in advance and fixed by a system designer. However, in the exemplary embodiment illustrated in FIG. 5, a user can change the parameter information.

For example, when a user views a movie in a dark place using a DVD-player, as described with reference to FIG. 4, the user may select the low-light mode as a display mode using a display mode select button in the DVD-player in operation S500.

Then, the signal processor 220 recognizes the selection of the low-light mode in response to an occurrence of an interrupt of a user input and displays to the user parameter information that has been set and stored by the system designer with respect to the selected display mode in operation S510. Then, the user sets a value of one or more parameters through a user interface provided by a display apparatus in operation S520. For example, one of the parameters may be "brightness" in the low-light mode, and the user can decrease the value of the "brightness" parameter. If the value of the parameter is set in such way, the signal processor 220 stores the value of the parameter in operation S530, performs signal information conversion operations such as Equations (1) through (3) using the value of the parameter in operation S540, and transmits signal information resulting from the operations to the display driver circuit 230 in operation S550. In operation S560, an image signal is displayed in the low-light mode.

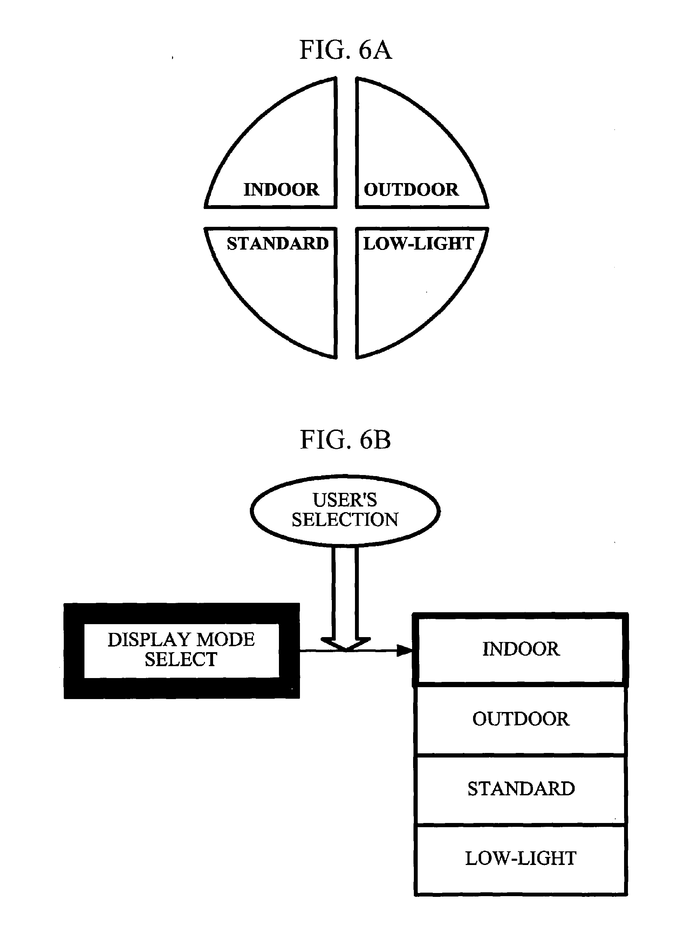

FIG. 6A illustrates an interface for adaptive display control according to an exemplary embodiment of the present invention. The interface is provided in an external portion of a display apparatus to allow a user to select a display mode. In this example, there are four display mode buttons. However, the number of display mode buttons is not restricted.

When the user selects (e.g., presses) one of four mode buttons, i.e., "indoor", "outdoor", "standard", and "low-light" shown in FIG. 6A, an image is displayed in a display mode corresponding to the selected mode button.

FIG. 6B illustrates an interface for adaptive display control according to another exemplary embodiment of the present invention. The interface shown in FIG. 6B may be applied to a display apparatus requiring an interface for display mode selection to occupy smaller space than the interface illustrated in FIG. 6A.

The display apparatus may provide a "display mode select" button or icon providing a display mode select function. When a user selects (e.g., presses, highlights, clicks, actuates, etc.) the display mode select button or icon, four predetermined display modes are displayed in this example. Then, the user can move to a desired display mode using a direction key and selects the desired display mode, thereby changing the display mode.

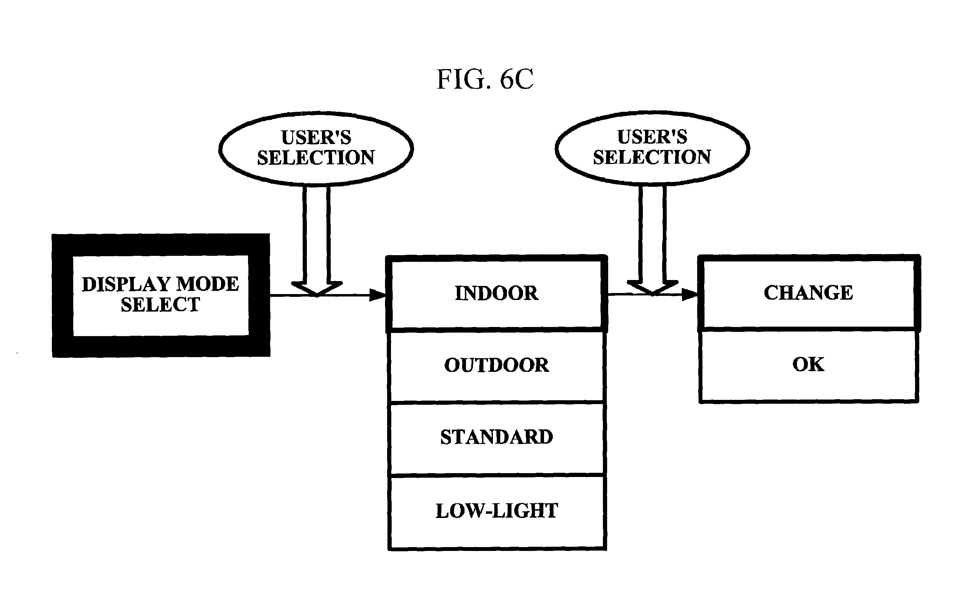

FIG. 6C illustrates an interface for adaptive display control according to still another exemplary embodiment of the present invention. The interface illustrated in FIG. 6C allows a user to change a value of one or more parameters stored in advance.

A display apparatus can provide a "display mode select" button or icon providing a display mode select function. In this example, there are four display mode buttons or icons. However, the number of display mode buttons is not restricted.

When the user presses the display mode select button or icon, four predetermined display modes are displayed. Then, the user moves to a desired display mode using a direction key and selects the desired display mode. Then, a menu can be displayed to allow the user to select changing of a predetermined value of a parameter corresponding to the selected display mode or maintaining of the predetermined value of the parameter. If the user selects the changing of the predetermined value of the parameter, the display apparatus provides an interface allowing the user to change the value of the parameter. Similarly, values of other parameters of the selected display mode can be changed or maintained.

Meanwhile, the forms and arrangements of the interfaces illustrated in FIGS. 6A through 6B may be changed according to users' tastes or aesthetic points of view. In addition, modification can be made to the forms and styles of the interfaces without departing from the spirit and scope of the present invention as defined by the appended claims.

In addition, exemplary embodiments of the present invention can also be implemented through computer readable code/instructions and implemented in general-use digital computing devices through use of a medium, e.g. a computer readable medium including the computer readable code. The computer readable medium can correspond to any medium/media permitting the storing or transmission of the computer readable code.

This computer readable code can be recorded/transferred on a computer readable medium in a variety of ways. Examples of the computer readable medium may include magnetic storage media (e.g., ROM, floppy disks, hard disks, etc.), optical recording media (e.g. CD-ROMs, DVDs, etc.), and storage media such as carrier waves or other transmission media (e.g., transmission through the Internet or intranets.) The computer readable code can be recorded/transferred through a wired or wireless network.

The computer readable code may also be loaded onto a computer or other programmable data processing apparatus to perform a series of operations on a computer or other programmable apparatus to produce a computer implemented process such that the instructions that are executed on the computer or other programmable apparatus provide operations for implementing the above mentioned functions specified in at least corresponding flowchart block (s). And each block of the flowchart illustrations may represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

According to the present invention, with simple button operation, a user can view images at a picture quality appropriate to an external environment. In addition, since image signal information is controlled, power consumption of a display panel can be maintained constant.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1.   An apparatus for adaptive display control, comprising:

    a display unit (240);
    an interface unit (250) to provide an interface allowing a user to select a display mode corresponding to an external environment of the display unit (240); and
    a signal processor (220) to perform at least one operation to convert image signal information, using the image signal information and at least one predetermined display mode parameter corresponding to the selected display mode, to provide the converted image signal information to the display unit (240).

2.   The apparatus of claim 1, further comprising' a video decoder (210) receiving a video signal and extracting the image signal information from the video signal.

3.   The apparatus of claim 1 or claim 2, further comprising a display driver circuit (230) which receives the converted image signal information.

4.   The apparatus of any preceding claim, wherein the display unit (240) further comprises a display screen, and wherein the display driver circuit (230) drives the display screen based on the converted image signal information.

5.   A method for adaptive display control, comprising:

    selecting a display mode corresponding to an external environment;
    converting image signal information using the image signal information included in a video signal and at least one predetermined display mode parameter of the selected display mode; and
    displaying the converted image signal information in the selected display mode on a display unit.

6.   The method or apparatus of any preceding claim, wherein the image signal information has a red-green-blue (RGB) 24-bit format.

7. The method or apparatus of any preceding claim, wherein the image signal information has an ITU-R BT.656/601 format.

8. A medium comprising computer-readable instructions implementing:

   selecting a display mode corresponding to an external environment of a display unit (240);
   converting image signal information using the image signal information included in a video signal and at least one predetermined display mode parameter of the selected display mode to be displayed in the selected display mode on the display unit (240).

9. The medium, method or apparatus of any preceding claim, wherein the at least one predetermined display mode parameter comprises blacklevel information.

10. The medium, method or apparatus of any preceding claim, wherein the at least one predetermined display mode parameter comprises contrast information.

11. The medium, method or apparatus of any preceding claim, wherein the at least one predetermined display mode parameter comprises brightness information.

12. The medium, method or apparatus of any preceding claim, wherein the display unit (240) is one of a cathode ray tube and a liquid crystal display.

13. The medium, method or apparatus of any preceding claim, wherein the display unit (240) is a plasma display panel.

14. The medium, method or apparatus of any preceding claim, wherein the selected display mode is one of standard, indoor, outdoor, and low-light.

# FIG. 1

EP 1 580 727 A2

## FIG. 2

VIDEO SIGNAL → **VIDEO DECODER** [210] → **SIGNAL PROCESSOR** [220] → **DISPLAY DRIVER CIRCUIT** [230] → **DISPLAY UNIT** [240]

**INTERFACE UNIT** [250] → SIGNAL PROCESSOR

EP 1 580 727 A2

FIG. 3

START — S300

DEFINE PARAMETERS NEEDED IN EACH DISPLAY MODE — S310

SET VALUES OF PARAMETERS — S320

STORE VALUES OF PARAMETERS — S330

END — S340

# FIG. 4

```
┌─────────────────────┐
│    USER SELECTS      │  ～ S400
│   DISPLAY MODE       │
└─────────────────────┘
          │
          ▼
┌─────────────────────┐
│ RECEIVE SELECTED     │  ～ S410
│ DISPLAY MODE         │
│ INFORMATION          │
└─────────────────────┘
          │
          ▼
┌─────────────────────┐
│ EXTRACT PARAMETER    │
│ INFORMATION STORED   │  ～ S420
│ WITH RESPECT TO      │
│ SELECTED DISPLAY     │
│ MODE                 │
└─────────────────────┘
          │
          ▼
┌─────────────────────┐
│ PERFORM SIGNAL       │
│ INFORMATION          │  ～ S430
│ CONVERSION           │
│ OPERATIONS           │
└─────────────────────┘
          │
          ▼
┌─────────────────────┐
│ TRANSMIT SIGNAL      │
│ INFORMATION TO       │  ～ S440
│ DISPLAY DRIVER       │
│ CIRCUIT              │
└─────────────────────┘
          │
          ▼
┌─────────────────────┐
│ DISPLAY IMAGE SIGNAL │  ～ S450
│ IN SELECTED DISPLAY  │
│ MODE                 │
└─────────────────────┘
          │
          ▼
┌─────────────────────┐
│        END           │  ～ S460
└─────────────────────┘
```

11

## FIG. 5

USER SELECTS
DISPLAY MODE — S500

DISPLAY PARAMETER WITH
RESPECT TO SELECTED
DISPLAY MODE — S510

SET VALUE OF PARAMETER — S520

STORE VALUE OF PARAMETER — S530

PERFORM SIGNAL
INFORMATION CONVERSION
OPERATIONS — S540

TRANSMIT SIGNAL
INFORMATION TO DISPLAY
DRIVER CIRCUIT — S550

DISPLAY IMAGE SIGNAL IN
SELECTED DISPLAY MODE — S560

END — S570

## FIG. 6A

INDOOR | OUTDOOR

STANDARD | LOW-LIGHT

## FIG. 6B

USER'S SELECTION

DISPLAY MODE SELECT

INDOOR

OUTDOOR

STANDARD

LOW-LIGHT

FIG. 6C